# EUROPEAN PATENT APPLICATION

(11) **EP 4 456 557 A1**
(43) Date of publication of application: **30.10.2024**
(21) Application number: 24165813.7
(22) Date of filing: 25.03.2024
(51) Int. Cl.: H04R 1/10, H04R 5/033, H04R 29/00

(54) **EARPHONE APPARATUS AND WEARING DETECTION METHOD**

(30) Priority: 28.04.2023 JP 2023074757
(71) Applicant: Panasonic Intellectual Property Management Co., Ltd., Osaka-shi, Osaka 571-0057 (JP)
(72) Inventor: MATSUO, Kiyoto, Osaka, 571-0057 (JP); FUJIWARA, Ryota, Osaka, 571-0057 (JP)
(74) Representative: Eisenführ Speiser

(57) **Abstract**

An earphone apparatus includes a pair of earphone devices worn on ears of a user. A first earphone device, which is one of the pair of earphone devices, has a first communication interface configured to wirelessly connect to a second earphone device communicably, which is the other of the pair of earphone devices, and a first processor configured to determine a wearing state of each of the first earphone device and the second earphone device on the ears of the user based on a reception parameter of a signal received from the second earphone device.

## Description

### TECHNICAL FIELD

The present disclosure relates to an earphone apparatus and a wearing detection method.

### BACKGROUND ART

Patent Literature 1 discloses a system including two wearable wireless earphones connected to each other and paired with one or more companion communication devices. In this system, the wearable wireless earphone can execute processing such as formation of pairing with the companion communication device, reception of voice data from the companion communication device, and transmission of the voice data to a second wearable wireless earphone. The wearable wireless earphone includes, for example, any one of an optical proximity sensor, a pressure sensor, a thermal sensor, and a moisture sensor as one or more sensors for detecting a time at which the wearable wireless earphone is placed on ears of a user.

### CITATION LIST

### PATENT LITERATURE

Patent Literature 1: JP2020-31444A

### SUMMARY OF INVENTION

In the configuration of Patent Literature 1, it is assumed that the wearable wireless earphone (hereinafter, simply referred to as "wireless earphone") per se includes a sensor for detecting whether the wireless earphone is worn on the ears of the user. For this reason, it is necessary to separately place a device called a sensor (in other words, a structure) inside a housing of the wireless earphone, which creates issues such as an increase in the number of parts, an increase in a size of a mounting board, and restrictions on a miniaturization of the housing. Further, although the wireless earphone is placed in the ears of the user, a placement location is not uniformly determined and may vary among users who wear the wireless earphone. Therefore, there is a concern that a detection accuracy of the device being worn on the ears of the user may not be stable and may vary.

The present disclosure is made in view of the above-described circumstances in the related art, and an object of the present disclosure is to provide an earphone apparatus and a wearing detection method that easily and stably detect whether the earphone apparatus is worn on ears of a user without placing a sensor for wearing detection in a housing.

The present disclosure provides an earphone apparatus including a pair of earphone devices worn on ears of a user. A first earphone device, which is one of the pair of earphone devices, includes a first communication interface configured to wirelessly connect to a second earphone device communicably, which is the other of the pair of earphone devices, and a first processor configured to determine a wearing state of each of the first earphone device and the second earphone device on the ears of the user based on a reception parameter of a signal received from the second earphone device.

Further, the present disclosure provides a wearing detection method executed by at least one of a pair of earphone devices worn on ears of a user. The wearing detection method includes wirelessly communicably connecting to a first earphone device, which is one of the pair of earphone devices, and a second earphone device, which is the other of the pair of earphone devices, and determining a wearing state of each of the first earphone device and the second earphone device on the ears of the user based on a reception parameter of a signal received from the first earphone device or the second earphone device.

According to the present disclosure, it is possible to easily and stably detect whether the earphone apparatus is worn in the ears of the user without placing a sensor for wearing detection in a housing.

### BRIEF DESCRIPTION OF DRAWINGS

FIG. 1 is a block diagram showing a hardware configuration example of an earphone apparatus according to a first embodiment;
FIG. 2A is a diagram schematically showing a reception sensitivity in a state in which earphone devices are worn on both ears;
FIG. 2B is a diagram schematically showing a reception sensitivity in a state in which the earphone device is worn on only one ear;
FIG. 2C is a diagram schematically showing a reception sensitivity in a state in which no earphone device is worn on both ears;
FIG. 3 is a flowchart showing a first operation procedure example of the earphone apparatus according to the first embodiment in time series;
FIG. 4 is a flowchart showing a second operation procedure example of the earphone apparatus according to the first embodiment in time series;
FIG. 5 is a flowchart showing a third operation procedure example of the earphone apparatus according to the first embodiment in time series; and
FIG. 6 is a flowchart showing a fourth operation procedure example of the earphone apparatus according to the first embodiment in time series.

### DESCRIPTION OF EMBODIMENTS

Hereinafter, embodiments of an earphone apparatus and a wearing detection method according to the present disclosure will be described in detail with reference to the drawings as appropriate. However, unnecessarily detailed descriptions may be omitted. For example, a detailed description of already well-known matters and a redundant description of substantially the same configuration may be omitted. This is to avoid unnecessary redundancy of the following description and to facilitate understanding of a person skilled in the art. It should be noted that the accompanying drawings and the following description are provided for a person skilled in the art to fully understand the present disclosure, and are not intended to limit the subject matter described in the claims.

As a use case according to an embodiment below, a situation in which a user wears an earphone apparatus according to the present disclosure and receives and plays a music signal transmitted from a mobile wireless terminal (for example, a smartphone) wirelessly communicably connected to an earphone apparatus in the earphone apparatus will be described as an example. However, the use case is not limited to the above-described example.

### 1. Configuration of System

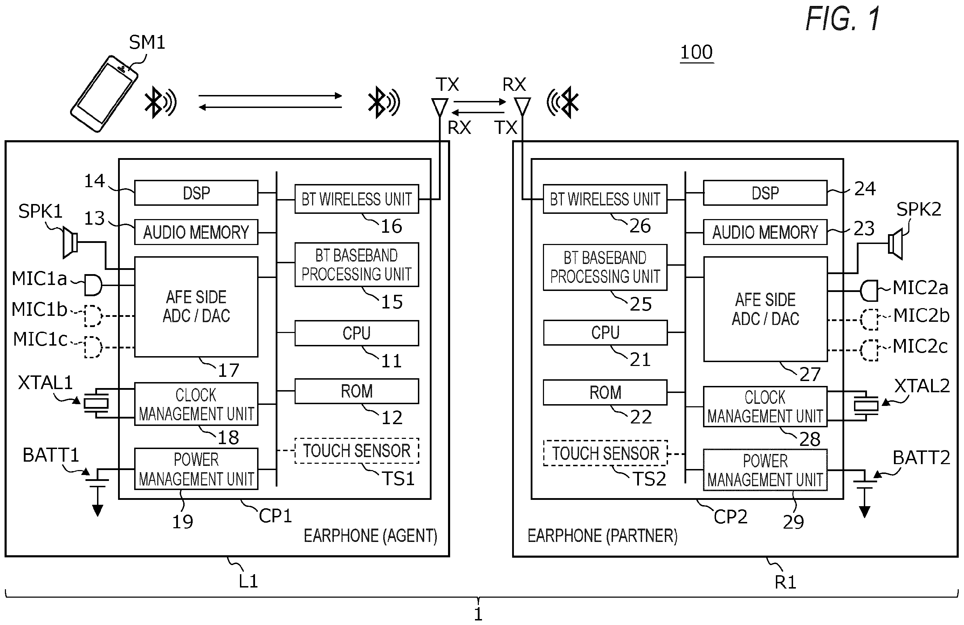

First, a system configuration example of a wireless communication system 100 according to the first embodiment will be described with reference to FIG. 1. FIG. 1 is a block diagram showing a hardware configuration example of an earphone apparatus 1 according to the first embodiment. The wireless communication system 100 includes a mobile wireless terminal (for example, a smartphone SM1) held by a user, an earphone device L1 that can be worn on and detached from the left ear by the user, and an earphone device R1 that can be worn on and detached from the right ear by the user. By the earphone devices L1 and R1, an earphone apparatus 1 as an example of an earphone apparatus according to the present disclosure is implemented.

The smartphone SM1 is an example of the mobile wireless terminal held by the user and is wirelessly communicably connected to one of the earphone devices L1 and R1 (for example, the earphone device L1). That is, the earphone device L1 can perform the wireless communication (transmit and receive, the same applies hereinafter) on a data signal such as a music signal or various control signals with the smartphone SM1. However, the earphone device R1 cannot directly wirelessly communicate with the smartphone SM1, and can only wirelessly communicate with the earphone device L1. In the present embodiment, although the earphone device L1 is cited as an example of an earphone device that directly wirelessly communicates with the smartphone SM1, the earphone device R1 may also be the earphone device that directly wirelessly communicates with the smartphone SM1. In that case, the earphone device L1 can perform the above-described wireless communication only with the earphone device R1.

A hardware configuration of the smartphone SM1 may be the same as a hardware configuration of an existing well-known smartphone on condition that the smartphone SM1 includes a communication module capable of wirelessly communicating (for example, Bluetooth (registered trademark)) with any one of the earphone devices (for example, the earphone device L1). Therefore, in the present embodiment, detailed descriptions of the hardware configuration of the smartphone SM1 are omitted.

### 2. Procedure for Establishing Wireless Connection between Devices

(1) In the wireless communication system 100, first, the smartphone SM1 and one of the earphone devices (for example, the earphone device L1) perform a pairing operation using Bluetooth (registered trademark) by an operation or the like of the user.
(2) Through the pairing operation in (1), the smartphone SM1 and the earphone device L1 establish wireless connection so as to be able to wirelessly communicate with each other based on Bluetooth (registered trademark).
(3) After (2), the earphone device L1 has a role as an earphone (AGENT). That is, the smartphone SM1 and the earphone device L1 wirelessly communicate with each other based on Bluetooth (registered trademark).
(4) The earphone device L1 performs the pairing operation using Bluetooth (registered trademark) with the other earphone device (for example, the earphone device R1). The processing (4) may be executed before the processing (1). That is, before the pairing operation is performed between the smartphone SM1 and one of the earphone devices (for example, the earphone device L1), the respective earphone devices may perform the pairing operation in advance.
(5) Through the pairing operation in (4), the earphone device L1 and the earphone device R1 establish the wireless connection so as to be able to wirelessly communicate with each other based on Bluetooth (registered trademark).
(6) After (5), the earphone device R1 has a role as an earphone (PARTNER). That is, the earphone device L1 and the earphone device R1 wirelessly communicate with each other based on Bluetooth (registered trademark). For example, the control signal (for example, a control signal for alive monitoring) is periodically transmitted from the earphone device L1 to the earphone device R1 and is received by the earphone device R1. In addition, the control signal (for example, the control signal for alive monitoring) is periodically transmitted from the earphone device R1 to the earphone device L1 and is received by the earphone device L1.

### 3. Configuration of Earphone Device

Configuration of the earphone devices will be explained in an order of the earphone devices L1 and R1.

### 3-1. Configuration of Earphone Device L1 (Earphone (AGENT))

The earphone device L1 is worn on or detached from the left ear of the user. The earphone device L1 wirelessly communicates with the smartphone SM1 or with the earphone device R1. Hereinafter, the earphone device that wirelessly communicates with the smartphone SM1 may be referred to as the "earphone (AGENT)" (see FIG. 1). On the other hand, the earphone device that wirelessly communicates only with the earphone (AGENT) without wirelessly communicating with the smartphone SM1 may be referred to as the "earphone (PARTNER)" (see FIG. 1).

The earphone device L1 includes a central processing unit (CPU) 11, a read only memory (ROM) 12, an audio memory 13, a digital signal processor (DSP) 14, a BT baseband processing unit 15, a BT wireless unit 16, an AFE side ADC/DAC 17 connected to a speaker SPK1 and microphones MIC1a to MIC1c, a clock management unit 18 connected to an oscillator XTAL1, a power management unit 19 connected to a battery BATT1, and a touch sensor TS1. These units are connected to one another via internal buses of the earphone device L1 so that the data signal or the control signal can be input and output from one another.

In the earphone device L1, the CPU 11, the ROM 12, the audio memory 13, the DSP 14, the BT baseband processing unit 15, the BT wireless unit 16, the AFE side ADC/DAC 17, the clock management unit 18, the power management unit 19, and the touch sensor TS1 may be mounted on, for example, one semiconductor chip CP1.

The CPU 11 functions as a controller that controls overall operations of the earphone device L1, and executes control processing for integrally controlling operations of the units of the earphone device L1, input and output processing of the data signal/control signal with the units of the earphone device L1, arithmetic processing of the data signal/control signal, and storage processing of the data signal/control signal. The CPU 11 sends, for example, a music signal sent from the smartphone SM1 to the DSP 14, and instructs the DSP 14 to execute predetermined signal processing for generating the music signal to be output from the speaker SPK1. The CPU 11 measures a reception parameter (for example, received electric field strength or reception sensitivity) of a reception signal from the other earphone device R1 obtained via the BT wireless unit 16 and the BT baseband processing unit 15. The received electric field strength corresponds to, for example, a received strength signal indicator (RSSI), and is not limited thereto.

The ROM 12 is an example of a memory included in the earphone device L1 and stores a program that defines various kinds of processing executed by the earphone device L1 and data necessary for executing the program in association with each other.

The audio memory 13 is an example of a memory included in the earphone device L1 and temporarily stores the data signal/control signal generated or acquired by at least one of the CPU 11, the DSP 14, the BT baseband processing unit 15, and the BT wireless unit 16.

The DSP 14 performs well-known predetermined signal processing on the music signal sent from the smartphone SM1 or a sound signal picked up from each of the microphones MIC1a to MICIc based on the instruction from the CPU 11. The DSP 14 outputs the music signal or the sound signal subjected to the predetermined signal processing from the speaker SPK1 via the AFE side ADC/DAC 17.

The BT baseband processing unit 15 is implemented with a communication circuit capable of executing various kinds of signal processing for a baseband (for example, 600 to 900 MHz). The BT baseband processing unit 15 converts a frequency band of a signal (that is, the reception signal) sent from the smartphone SM1 or the earphone device R1 in conformity with a communication standard of Bluetooth (registered trademark) and received by the BT wireless unit 16 into a signal in an existing baseband, and outputs the signal to the CPU 11. The BT baseband processing unit 15 converts the data signal to be transmitted to the smartphone SM1 or the earphone device R1 into a transmission signal in the existing baseband and outputs the transmission signal to the BT wireless unit 16.

The BT wireless unit 16 is implemented with a communication circuit capable of executing various kinds of signal processing for a high-frequency band (for example, 2.4 GHz), which is a frequency band higher than the baseband. The BT wireless unit 16 receives a high-frequency band signal sent from the smartphone SM1 or the earphone device R1 in conformity with the communication standard of Bluetooth (registered trademark), converts the transmission signal in the existing baseband from the BT baseband processing unit 15 into the high-frequency band signal, and transmits the high-frequency band signal to the smartphone SM1 or the earphone device R1.

The speaker SPK1 is connected to the AFE side ADC/DAC 17 and outputs the music signal or the sound signal converted into an analog signal by the AFE side ADC/DAC 17. While the earphone device L1 is worn on the left ear of the user, a front surface of the speaker SPK1 (in other words, a sound output surface) is directed toward the external ear side and the inner ear side of the left ear. Accordingly, the music signal or the sound signal output from the speaker SPK1 is transmitted to the external ear, the inner ear, and the eardrum of the left ear of the user, and the user can listen to the music or the sound.

The microphone MIC1a is a so-called speech microphone and is placed so as to be able to pick up (in other words, capture) a voice signal based on a speech of the user. The microphone MIC1a is implemented as a device capable of picking up a voice (that is, detecting the voice signal) generated based on the speech of the user. The microphone MIC1a picks up the voice generated based on the speech of the user, converts the voice into an electric signal, and sends the electric signal to the AFE side ADC/DAC 17. The voice of the user is picked up by the microphone MIC1a and converted into the electric signal, and presence or absence of the speech of the user can be detected by the microphone MIC1a according to a magnitude of the electric signal.

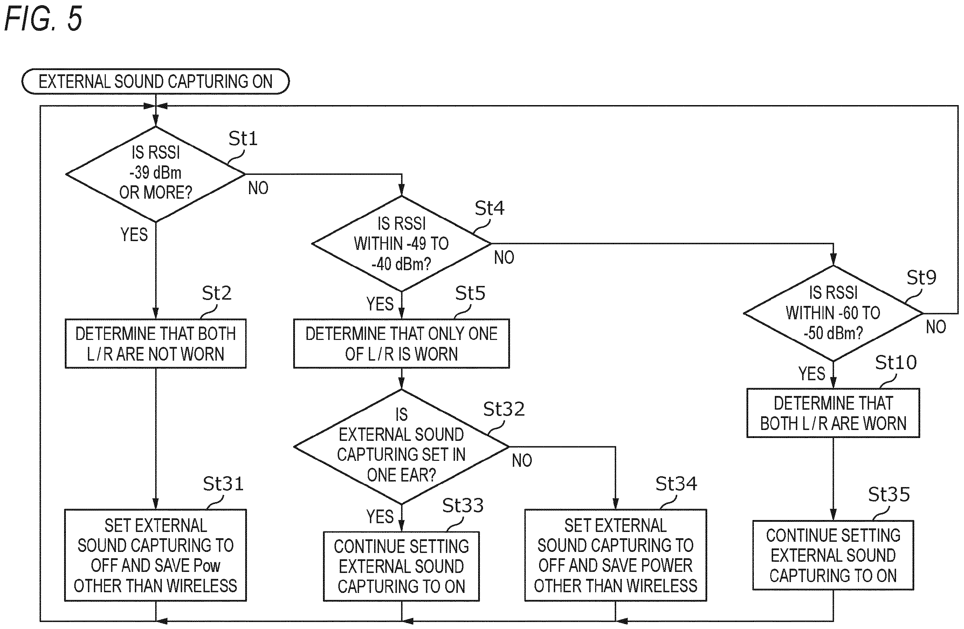

The microphone MIC1b is a so-called feed forward (FF) microphone and is placed so as to be able to pick up (in other words, capture) an outside ambient sound (external sound) or the like of the earphone device L1. That is, the microphone MIC1b can detect the external sound in a state in which the earphone device L1 is worn on the left ear of the user. The microphone MIC1b converts the external sound to an electric signal (sound signal) and sends the electric signal to the AFE side ADC/DAC 17. While an external sound capturing mode is set in the audio memory 13, the CPU 11 or DSP 14 outputs the external sound picked up by the microphone MIC1b from the speaker SPK1 via the AFE side ADC/DAC 17 (see FIG. 5).

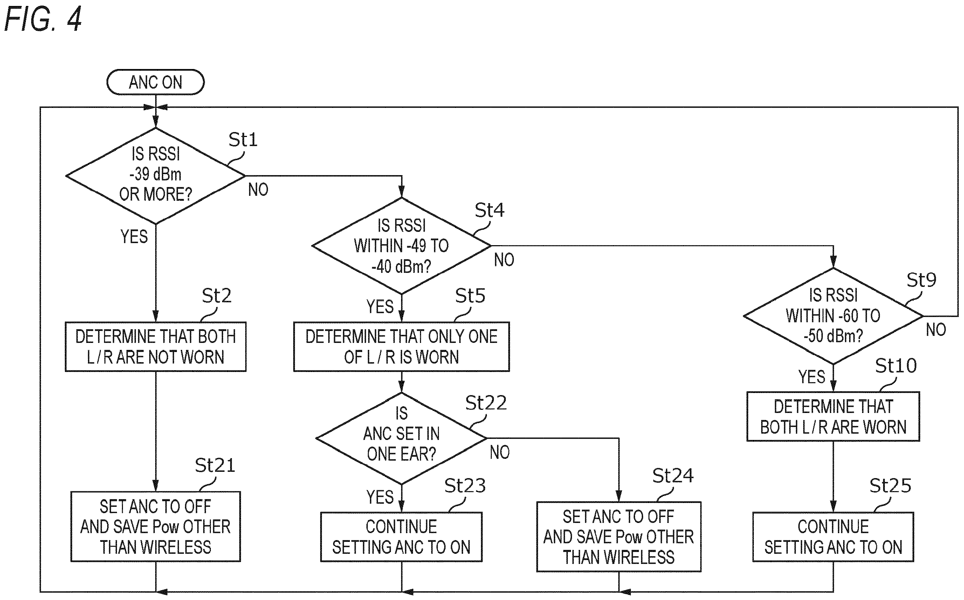

The microphone MIC1c is a so-called feedback (FB) microphone and is placed as close as possible to the ear canal of the left ear of the user. The microphone MIC1c converts a sound leaking from between the left ear of the user and an earpiece (not shown) attached to the earphone device L1 in a state in which the earphone device L1 is worn on the left ear of the user into an electric signal (sound signal) and sends the electric signal to the AFE side ADC/DAC 17. While an active noise cancelling (ANC) mode is set in the audio memory 13, the CPU 11 or the DSP 14 performs signal processing (for example, noise cancelling processing or noise reduction processing) to prevent the sound signal picked up by the microphone MIC1c to such an extent that a human does not easily recognize the sound signal in the sense of hearing (see FIG. 4).

The AFE side ADC/DAC 17 is implemented as a so-called analog digital converter (ADC) and a digital analog converter (DAC) on an analog front-end side. The AFE side ADC/DAC 17 converts a digital music signal or sound signal from the CPU 11 or the DSP 14 into the analog signal and outputs the analog signal from the speaker SPK1, and converts an analog sound signal picked up by each of the microphones MIC1a to MIC1c into a digital signal and outputs the digital signal to the CPU 11 or the DSP 14.

The oscillator XTAL1 generates a reference signal for generating a clock signal having a predetermined frequency.

The clock management unit 18 multiplies the reference signal generated by the oscillator XTAL1 by a predetermined multiple to generate a clock signal having a basic operating frequency of the earphone device L1. Each unit of the earphone device L1 operates based on the clock signal generated by the clock management unit 18.

The battery BATT1 is a secondary battery (in other words, a storage battery) such as a so-called lithium ion battery. A remaining capacity (in other words, charging status) of the battery BATT1 is managed by the power management unit 19.

The power management unit 19 monitors the remaining capacity of the battery BATT1 and supplies power necessary for the operation of each unit of the earphone device L1 based on the remaining capacity (in other words, remaining power consumption) of the battery BATT1.

The touch sensor TS1 is a sensor element having a function of detecting an input operation (for example, a touch operation) of the user. The touch sensor TS1 may be implemented as, for example, a capacitance electrode. A shape of the touch sensor TS1 may be, for example, a circular surface, an elliptical surface, or a rectangular surface. While a setting of the touch sensor TS1 is set to ON (that is, enabled) in the audio memory 13, the CPU 11 executes processing corresponding to the input operation of the user detected by the touch sensor TS1 or causes the DSP 14 to execute the processing. The touch sensor TS1 may be omitted from the configuration of the earphone device L1.

Examples of the input operation by the user include the following operations. When an input operation (touch operation) for a short time is performed, the earphone device L1 may instruct the smartphone SM1 to perform any one of playing music, stopping music, skipping forward, skipping back, or the like. When an input operation for a long time (a so-called long-press touch) is performed, the earphone device L1 may perform the pairing operation or the like for performing wireless communication such as Bluetooth (registered trademark) with the smartphone SM1. When it is detected that the user touches a surface of the touch sensor TS1 with a finger (a swiping operation), the earphone device L1 may perform, for example, volume adjustment of the music being played at a detection time.

### 3-2. Configuration of Earphone Device R1 (earphone (PARTNER))

The earphone device R1 is worn on or detached from the right ear of the user. The earphone device R1 wirelessly communicates with the earphone device L1.

The earphone device R1 includes a CPU 21, a ROM 22, an audio memory 23, a DSP 24, a BT baseband processing unit 25, a BT wireless unit 26, an AFE side ADC/DAC 27 connected to a speaker SPK2 and microphones MIC2a to MIC2c, a clock management unit 28 connected to an oscillator XTAL2, a power management unit 29 connected to a battery BATT2, and a touch sensor TS2. These units are connected to one another via internal buses of the earphone device R1 so that the data signal or the control signal can be input and output from one another.

In the earphone device R1, the CPU 21, the ROM 22, the audio memory 23, the DSP 24, the BT baseband processing unit 25, the BT wireless unit 26, the AFE side ADC/DAC 27, the clock management unit 28, the power management unit 29, and the touch sensor TS2 may be mounted on, for example, one semiconductor chip CP2.

The CPU 21 functions as a controller that controls overall operations of the earphone device R1, and executes control processing for integrally controlling operations of the units of the earphone device R1, input and output processing of the data signal/control signal with the units of the earphone device R1, arithmetic processing of the data signal/control signal, and storage processing of the data signal/control signal. The CPU 21 sends, for example, the music signal sent from the earphone device L1 (that is, the earphone (AGENT)) to the DSP 24, and instructs the DSP 24 to execute predetermined signal processing for generating the music signal to be output from the speaker SPK2. The CPU 21 measures a reception parameter (for example, received electric field strength or reception sensitivity) of a reception signal from the other earphone device L1 obtained via the BT wireless unit 26 and the BT baseband processing unit 25. The received electric field strength corresponds to, for example, RSSI, and is not limited thereto.

The ROM 22 is an example of a memory included in the earphone device R1 and stores a program that defines various kinds of processing executed by the earphone device R1 and data necessary for executing the program in association with each other.

The audio memory 23 is an example of a memory included in the earphone device R1 and temporarily stores the data signal/control signal generated or acquired by at least one of the CPU 21, the DSP 24, the BT baseband processing unit 25, and the BT wireless unit 26.

The DSP 24 performs well-known predetermined signal processing on the music signal sent from the earphone device L1 (that is, the earphone (AGENT)) or a sound signal picked up from each of the microphones MIC2a to MIC2c based on the instruction from the CPU 21. The DSP 24 outputs the music signal or the sound signal subjected to the predetermined signal processing from the speaker SPK2 via the AFE side ADC/DAC 27.

The BT baseband processing unit 25 is implemented with a communication circuit capable of executing various kinds of signal processing for a baseband (for example, 600 to 900 MHz). The BT baseband processing unit 25 converts a frequency band of a signal (that is, the reception signal) sent from the earphone device L1 in conformity with the communication standard of Bluetooth (registered trademark) and received by the BT wireless unit 26 into a signal in an existing baseband, and outputs the signal to the CPU 21. The BT baseband processing unit 25 converts the data signal to be transmitted to the earphone device L1 into a transmission signal in the existing baseband and outputs the transmission signal to the BT wireless unit 26.

The BT wireless unit 26 is implemented with a communication circuit capable of executing various kinds of signal processing for a high-frequency band (for example, 2.4 GHz), which is a frequency band higher than the baseband. The BT wireless unit 26 receives a high-frequency band signal sent from the earphone device L1 in conformity with the communication standard of Bluetooth (registered trademark), converts the transmission signal in the existing baseband from the BT baseband processing unit 25 into the high-frequency band signal, and transmits the high-frequency band signal to the earphone device L1.

The speaker SPK2 is connected to the AFE side ADC/DAC 27 and outputs the music signal or the sound signal converted into an analog signal by the AFE side ADC/DAC 27. While the earphone device R1 is worn on the right ear of the user, a front surface of the speaker SPK2 (in other words, a sound output surface) is directed toward the external ear side and the inner ear side of the right ear. Accordingly, the music signal or the sound signal output from the speaker SPK2 is transmitted to the external ear, the inner ear, and the eardrum of the right ear of the user, and the user can listen to the music or the sound.

The microphone MIC2a is a so-called speech microphone and is placed so as to be able to pick up (in other words, capture) the voice signal based on the speech of the user. The microphone MIC2a is implemented as a device capable of picking up the voice (that is, detecting the voice signal) generated based on the speech of the user. The microphone MIC2a picks up the voice generated based on the speech of the user, converts the voice into an electric signal, and sends the electric signal to the AFE side ADC/DAC 27. The voice of the user is picked up by the microphone MIC2a and converted into the electric signal, and the presence or absence of the speech of the user can be detected by the microphone MIC2a according to a magnitude of the electric signal.

The microphone MIC2b is a so-called feed forward (FF) microphone and is placed so as to be able to pick up (in other words, capture) an outside ambient sound (external sound) or the like of the earphone device R1. That is, the microphone MIC2b can detect the external sound in a state in which the earphone device R1 is worn on the right ear of the user. The microphone MIC2b converts the external sound to an electric signal (sound signal) and sends the electric signal to the AFE side ADC/DAC 27. While the external sound capturing mode is set in the audio memory 23, the CPU 21 or DSP 24 outputs the external sound picked up by the microphone MIC2b from the speaker SPK2 via the AFE side ADC/DAC 27 (see FIG. 5).

The microphone MIC2c is a so-called feedback (FB) microphone and is placed as close as possible to the ear canal of the right ear of the user. The microphone MIC2c converts a sound leaking from between the right ear of the user and an earpiece (not shown) attached to the earphone device R1 in a state in which the earphone device R1 is worn on the right ear of the user into an electric signal (sound signal) and sends the electric signal to the AFE side ADC/DAC 27. While the active noise cancelling (ANC) mode is set in the audio memory 23, the CPU 21 or the DSP 24 performs signal processing (for example, noise cancelling processing or noise reduction processing) to prevent the sound signal picked up by the microphone MIC2c to such an extent that the human does not easily recognize the sound signal in the sense of hearing (see FIG. 4).

The AFE side ADC/DAC 27 is implemented as an ADC and a DAC on an analog front-end side. The AFE side ADC/DAC 27 converts a digital music signal or sound signal from the CPU 21 or the DSP 24 into the analog signal and outputs the analog signal from the speaker SPK2, and converts an analog sound signal picked up by each of the microphones MIC2a to MIC2c into a digital signal and outputs the digital signal to the CPU 21 or the DSP 24.

The oscillator XTAL2 generates a reference signal for generating a clock signal having a predetermined frequency.

The clock management unit 28 multiplies the reference signal generated by the oscillator XTAL2 by a predetermined multiple to generate a clock signal having a basic operating frequency of the earphone device R1. Each unit of the earphone device R1 operates based on the clock signal generated by the clock management unit 28.

The battery BATT2 is a secondary battery (in other words, a storage battery) such as a so-called lithium ion battery. A remaining capacity (in other words, charging status) of the battery BATT2 is managed by the power management unit 29.

The power management unit 29 monitors the remaining capacity of the battery BATT2 and supplies power necessary for the operation of each unit of the earphone device R1 based on the remaining capacity (in other words, remaining power consumption) of the battery BATT2.

The touch sensor TS2 is a sensor element having a function of detecting the input operation (for example, the touch operation) of the user. The touch sensor TS2 may be implemented as, for example, a capacitance electrode. A shape of the touch sensor TS2 may be, for example, a circular surface, an elliptical surface, or a rectangular surface. While a setting of the touch sensor TS2 is set to ON (that is, enabled) in the audio memory 23, the CPU 21 executes processing corresponding to the input operation of the user detected by the touch sensor TS2 or causes the DSP 24 to execute the processing. The touch sensor TS2 may be omitted from the configuration of the earphone device R1.

Examples of the input operation by the user include the following operations. When the input operation (touch operation) for a short time is performed, the earphone device R1 may instruct the smartphone SM1 to perform any one of playing music, stopping music, skipping forward, skipping back, or the like via the earphone device L1. When the input operation for a long time (a so-called long-press touch) is performed, the earphone device R1 may perform the pairing operation or the like for performing wireless communication such as Bluetooth (registered trademark) with the earphone device L1. When it is detected that the user touches a surface of the touch sensor TS2 with a finger (the swiping operation), the earphone device R1 may perform, for example, the volume adjustment of the music being played at the detection time.

### 4. Relation between Wearing State and Received Electric Field Strength or Reception Sensitivity of Earphone Device

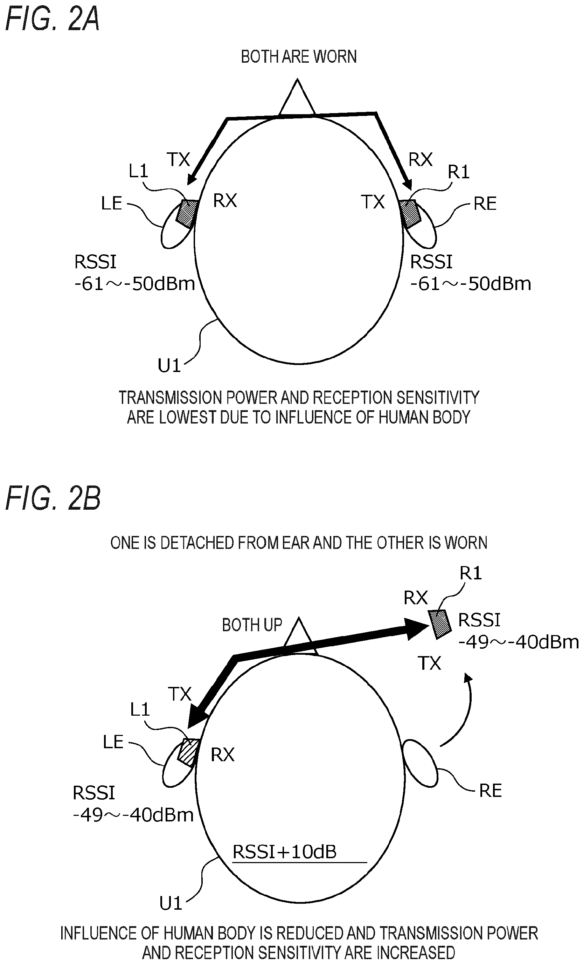

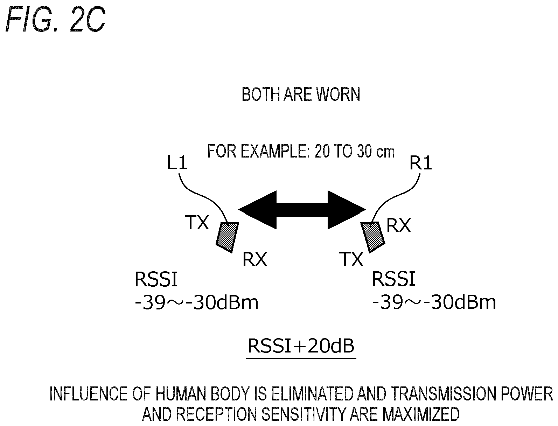

Next, a relation between the wearing state and the received electric field strength or reception sensitivity of the earphone devices L1 and R1 will be described with reference to FIGS. 2A, 2B, and 2C. FIG. 2A is a diagram schematically showing a reception sensitivity in a state in which the earphone devices are worn on both ears. FIG. 2B is a diagram schematically showing a reception sensitivity in a state in which the earphone device is worn on only one ear. FIG. 2C is a diagram schematically showing a reception sensitivity in a state in which no earphone device is worn on both ears. In the description of FIGS. 2A to 2C, the earphone device L1 is assumed to be the earphone (AGENT), and the earphone device R1 is assumed to be the earphone (PARTNER), and the reverse may be used.

As shown in FIG. 2A, a user U1 is wearing the earphone devices L1 and R1 on both ears, respectively. That is, the earphone device L1 is worn on a left ear LE of the user U1, and the earphone device R1 is worn on a right ear RE of the user U1. As described with reference to FIG. 1, the earphone device L1 transmits and receives the data signal or the control signal (also simply referred to as the "signal") to and from the earphone device R1 in conformity with the communication standard of Bluetooth (registered trademark). Here, the reception sensitivity (received electric field strength) of the signal of each of the earphone devices L1 and R1 is -60 dBm to -50 dBm. The range of -60 dBm to -50 dBm is registered in the audio memory 13 (23) in advance as a threshold value indicating that both the earphone devices L1 and R1 are in the wearing state. That is, while the user U1 is wearing both the earphone devices L1 and R1, a transmission power and the reception sensitivity of each of the earphone devices L1 and R1 are the lowest among the states of FIG. 2A to FIG. 2C because the user U1 as a human body acts as an obstacle of radio wave transmission (conveyance).

As shown in FIG. 2B, the user U1 is wearing the earphone device only on one ear. That is, the earphone device L1 is worn on the left ear LE of the user U1, and the earphone device R1 is not worn on the right ear RE of the user U1. That is, FIG. 2B can be said to be a state in which the earphone device R1 is removed from the right ear RE by a hand of the user U1 from the state shown in FIG. 2A. In this case, the reception sensitivity (received electric field strength) of the signal of each of the earphone devices L1 and R1 is -49 dBm to -40 dBm, which is increased as compared to the case shown in FIG. 2A. The range of -49 dBm to -40 dBm is registered in the audio memory 13 (23) in advance as a threshold value indicating that only one of the earphone devices L1 and R1 is in the wearing state. It is considered that the earphone device R1 is detached from the right ear RE and is less likely to be affected by a diffraction phenomenon at the human body (for example, the head) of the user U1, and the signal can be received in the space, and thus the reception sensitivity is increased. Further, it is considered that the reception sensitivity of the earphone device L1 worn on the left ear LE is also increased as the transmission power of the signal transmitted from the earphone device R1 to the earphone device L1 is increased. Therefore, while the user U1 is wearing only one of the earphone devices L1 and R1, the transmission power and the reception sensitivity of each of the earphone devices L1 and R1 is increased as compared with the state shown in FIG. 2A.

As shown in FIG. 2C, the user U1 detaches and removes the earphone devices from both ears. That is, the earphone device L1 is not worn on the left ear LE of the user U1, and the earphone device R1 is also not worn on the right ear RE of the user U1. That is, FIG. 2C can be said to be a state in which the earphone device L1 is also removed from the left ear LE by a hand of the user U1 from the state shown in FIG. 2B. In this case, the reception sensitivity (received electric field strength) of the signal of each of the earphone devices L1 and R1 is -39 dBm to -30 dBm, which is further increased as compared to the case shown in FIG. 2B. The range of -39 dBm to -30 dBm is registered in the audio memory 13 (23) in advance as a threshold value indicating that both the earphone devices L1 and R1 are in a non-wearing state. It is considered that the earphone device L1 is also detached from the left ear LE and is less likely to be affected by the diffraction phenomenon at the human body (for example, the head) of the user U1, and the signal can be received in the space by both the earphone devices L1 and R1, and thus the reception sensitivity is further increased. Further, it is considered that the reception sensitivities of both the earphone devices L1 and R1 are also increased as the transmission power of the signal transmitted from the earphone device L1 (R1) to the earphone device R1 (L1) is increased. Therefore, while the user U1 is not wearing both the earphone devices L1 and R1, the transmission power and the reception sensitivity of each of the earphone devices L1 and R1 is further increased as compared with the state shown in FIG. 2B.

### 5. Operation Procedure of Earphone Apparatus

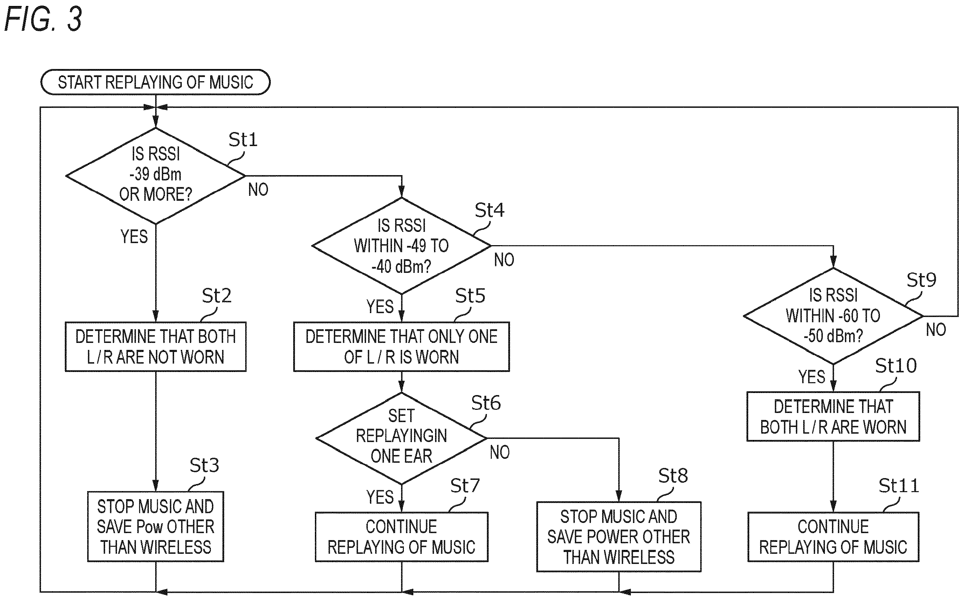

Next, an operation procedure example of the earphone apparatus 1 according to the present embodiment will be described with reference to FIGS. 3, 4, 5, and 6. In the following description, the earphone device L1 is exemplified as the earphone (AGENT), and the earphone device R1 is exemplified as the earphone (PARTNER), and the reverse may be used.

### 5-1. First Operation Procedure

FIG. 3 is a flowchart showing a first operation procedure example of the earphone apparatus 1 according to the first embodiment in time series. Various kinds of processing shown in FIG. 3 are mainly executed by one or both of the CPU 11 of the earphone device L1 of the earphone apparatus 1 and the CPU 21 of the earphone device R1 of the earphone apparatus 1. To simplify the description of FIG. 3, it is assumed that the CPU 11 of the earphone device L1 executes various kinds of processing.

As a premise of the description of FIG. 3, the earphone device L1 receives and plays the music signal transmitted from the smartphone SM1 in conformity with Bluetooth (registered trademark). That is, a mode for automatically playing a piece of music from the smartphone SM1 is set as one of user preset functions in the audio memory 13 of the earphone device L1. The process in FIG. 3 is periodically executed at a cycle of, for example, about 10 milliseconds.

In FIG. 3, the CPU 11 measures the reception parameter (for example, received electric field strength or reception sensitivity) of the reception signal from the other earphone device R1 obtained via the BT wireless unit 16 and the BT baseband processing unit 15. When determining that a measurement result (for example, RSSI) of the reception signal from the earphone device R1 is -39 dBm or more (step St1, YES), the CPU 11 determines that both the earphone devices L1 and R1 are not worn (see FIG. 2C) by referring to the audio memory 13 (step St2). The CPU 11 stops the playing processing from the speaker SPK1 of the music signal sent from the smartphone SM1 until a determination time point in step St2 based on the determination of step St2 (step St3). Further, the CPU 11 attempts to reduce a power consumption by interrupting or stopping the execution of various kinds of processing other than the wireless communication with each of the smartphone SM1 and the earphone device R1 (step St3). As a result, the earphone device L1 can prevent an increase in the power consumption due to the earphone devices L1 and R1 determined to be in the non-wearing state from both ears of the user. After step St3, the process of the CPU 11 returns to step St1 until a power of the earphone device L1 is turned off.

When determining that the measurement result (for example, RSSI) of the reception signal from the earphone device R1 is less than -39 dBm (step St1, NO), the CPU 11 determines whether the measurement result (for example, RSSI) of the reception signal from the earphone device R1 is within -49 dBm to -40 dBm (step St4). When determining that the measurement result (for example, RSSI) of the reception signal from the earphone device R1 is within -49 dBm to -40 dBm (step St4, YES), the CPU 11 determines that only one of the earphone devices L1 and R1 is worn on the ear of the user by referring to the audio memory 13 (step St5). Here, the CPU 11 refers to the audio memory 13 and determines whether a permission to play the music signal is set even when only one of the earphone devices L1 and R1 is in the wearing state (step St6). For example, the audio memory 13 stores a flag indicating whether to permit playing the music signal even when only one of the earphone devices L1 and R1 is in the wearing state. When determining that the permission to play the music signal is set even when only one of the earphone devices L1 and R1 is in the wearing state (step St6, YES), the CPU 11 continues the playing processing from the speaker SPK1 of the music signal sent from the smartphone SM1 until a determination time point in step St6 (step St7). After step St7, the process of the CPU 11 returns to step St1 until the power of the earphone device L1 is turned off.

When determining that the permission to play the music signal is not set even when only one of the earphone devices L1 and R1 is in the wearing state (step St6, NO), the CPU 11 stops the playing processing from the speaker SPK1 of the music signal sent from the smartphone SM1 until the determination time point in step St6 (step St8). Further, the CPU 11 attempts to reduce the power consumption by interrupting or stopping the execution of various kinds of processing other than the wireless communication with each of the smartphone SM1 and the earphone device R1 (step St8). As a result, the earphone device L1 can prevent the increase in the power consumption due to any one of the earphone devices in the non-wearing state. After step St8, the process of the CPU 11 returns to step St1 until the power of the earphone device L1 is turned off.

When determining that the measurement result (for example, RSSI) of the reception signal from the earphone device R1 is not within -49 dBm to -40 dBm (step St4, NO), the CPU 11 determines whether the measurement result (for example, RSSI) of the reception signal from the earphone device R1 is within -60 dBm to -50 dBm (step St9). When determining that the measurement result (for example, RSSI) of the reception signal from the earphone device R1 is within -60 dBm to -50 dBm (step St9, YES), the CPU 11 determines that both the earphone devices L1 and R1 are worn on the ears of the user by referring to the audio memory 13 (step St10). The CPU 11 continues the playing processing from the speaker SPK1 of the music signal sent from the smartphone SM1 until a determination time point in step St10 (step St11). After step St11, the process of the CPU 11 returns to step St1 until the power of the earphone device L1 is turned off. When it is determined that the measurement result (for example, RSSI) of the reception signal from the earphone device R1 is not within -60 dBm to -50 dBm (step St9, NO), since the RSSI may not be correctly measured by the CPU 11, the process of the CPU 11 returns to step St1 until the power of the earphone device L1 is turned off.

### 5-2. Second Operation Procedure

FIG. 4 is a flowchart showing a second operation procedure example of the earphone apparatus 1 according to the first embodiment in time series. Various kinds of processing shown in FIG. 4 are mainly executed by one or both of the CPU 11 of the earphone device L1 of the earphone apparatus 1 and the CPU 21 of the earphone device R1 of the earphone apparatus 1. To simplify the description of FIG. 4, it is assumed that the CPU 11 of the earphone device L1 executes various kinds of processing.

As a premise of the description of FIG. 4, the earphone device L1 stores, in the audio memory 13, a flag indicating that signal processing (noise cancelling processing) for preventing the sound signal picked up by the microphone MIC1c is to be performed (ANC setting ON). That is, a mode for executing the noise cancelling processing is set as one of the user preset functions in the audio memory 13 of the earphone device L1. The process in FIG. 4 is periodically executed at a cycle of, for example, about 10 milliseconds.

In FIG. 4, the CPU 11 measures the reception parameter (for example, received electric field strength or reception sensitivity) of the reception signal from the other earphone device R1 obtained via the BT wireless unit 16 and the BT baseband processing unit 15. When determining that a measurement result (for example, RSSI) of the reception signal from the earphone device R1 is -39 dBm or more (step St1, YES), the CPU 11 determines that both the earphone devices L1 and R1 are not worn (see FIG. 2C) by referring to the audio memory 13 (step St2). The CPU 11 deletes the flag indicating that the noise cancelling processing is to be performed (in other words, set ANC to OFF) based on the determination in step St2 (step St21). Further, the CPU 11 attempts to reduce the power consumption by interrupting or stopping the execution of various kinds of processing other than the wireless communication with each of the smartphone SM1 and the earphone device R1 (step St21). As a result, the earphone device L1 can prevent an increase in the power consumption due to the earphone devices L1 and R1 determined to be in the non-wearing state from both ears of the user. After step St21, the process of the CPU 11 returns to step St1 until the power of the earphone device L1 is turned off.

When determining that the measurement result (for example, RSSI) of the reception signal from the earphone device R1 is less than -39 dBm (step St1, NO), the CPU 11 determines whether the measurement result (for example, RSSI) of the reception signal from the earphone device R1 is within -49 dBm to -40 dBm (step St4). When determining that the measurement result (for example, RSSI) of the reception signal from the earphone device R1 is within -49 dBm to -40 dBm (step St4, YES), the CPU 11 determines that only one of the earphone devices L1 and R1 is worn on the ear of the user by referring to the audio memory 13 (step St5). Here, the CPU 11 refers to the audio memory 13 and determines whether a permission to execute the noise cancelling processing is set even when only one of the earphone devices L1 and R1 is in the wearing state (step St22). For example, the audio memory 13 stores a flag indicating whether to permit executing the noise cancelling processing even when only one of the earphone devices L1 and R1 is in the wearing state. When determining that the permission to execute the noise cancelling processing is set even when only one of the earphone devices L1 and R1 is in the wearing state (step St22, YES), the CPU 11 continues the execution of the noise cancelling processing (step St23). After step St23, the process of the CPU 11 returns to step St1 until the power of the earphone device L1 is turned off.

On the other hand, when determining that the permission to execute the noise cancelling processing is not set even when only one of the earphone devices L1 and R1 is in the wearing state (step St22, NO), the CPU 11 stops the execution of the noise cancelling processing (step St24, set ANC to OFF). Further, the CPU 11 attempts to reduce the power consumption by interrupting or stopping the execution of various kinds of processing other than the wireless communication with each of the smartphone SM1 and the earphone device R1 (step St24). As a result, the earphone device L1 can prevent the increase in the power consumption due to any one of the earphone devices in the non-wearing state. After step St24, the process of the CPU 11 returns to step St1 until the power of the earphone device L1 is turned off.

When determining that the measurement result (for example, RSSI) of the reception signal from the earphone device R1 is not within -49 dBm to -40 dBm (step St4, NO), the CPU 11 determines whether the measurement result (for example, RSSI) of the reception signal from the earphone device R1 is within -60 dBm to -50 dBm (step St9). When determining that the measurement result (for example, RSSI) of the reception signal from the earphone device R1 is within -60 dBm to -50 dBm (step St9, YES), the CPU 11 determines that both the earphone devices L1 and R1 are worn on the ears of the user by referring to the audio memory 13 (step St10). The CPU 11 continues the execution of the noise cancelling processing (step St25). After step St25, the process of the CPU 11 returns to step St1 until the power of the earphone device L1 is turned off. When it is determined that the measurement result (for example, RSSI) of the reception signal from the earphone device R1 is not within -60 dBm to -50 dBm (step St9, NO), since the RSSI may not be correctly measured by the CPU 11, the process of the CPU 11 returns to step St1 until the power of the earphone device L1 is turned off.

### 5-3. Third Operation Procedure

FIG. 5 is a flowchart showing a third operation procedure example of the earphone apparatus 1 according to the first embodiment in time series. Various kinds of processing shown in FIG. 5 are mainly executed by one or both of the CPU 11 of the earphone device L1 of the earphone apparatus 1 and the CPU 21 of the earphone device R1 of the earphone apparatus 1. To simplify the description of FIG. 5, it is assumed that the CPU 11 of the earphone device L1 executes various kinds of processing.

As a premise of the description of FIG. 5, the earphone device L1 stores, in the audio memory 13, a flag indicating that the external sound signal picked up by the microphone MIC1b is output from the speaker SPK1 (with external sound capturing setting). That is, a mode for executing the external sound capturing processing (That is, processing of outputting the picked-up external sound signal from the speaker. The same applies hereinafter.) is set as one of the user preset functions in the audio memory 13 of the earphone device L1. The process in FIG. 5 is periodically executed at a cycle of, for example, about 10 milliseconds.

In FIG. 5, the CPU 11 measures the reception parameter (for example, received electric field strength or reception sensitivity) of the reception signal from the other earphone device R1 obtained via the BT wireless unit 16 and the BT baseband processing unit 15. When determining that a measurement result (for example, RSSI) of the reception signal from the earphone device R1 is -39 dBm or more (step St1, YES), the CPU 11 determines that both the earphone devices L1 and R1 are not worn (see FIG. 2C) by referring to the audio memory 13 (step St2). The CPU 11 deletes the flag indicating that the external sound capturing processing is to be performed (in other words, set external sound capturing to OFF) based on the determination in step St2 (step St31). Further, the CPU 11 attempts to reduce the power consumption by interrupting or stopping the execution of various kinds of processing other than the wireless communication with each of the smartphone SM1 and the earphone device R1 (step St31). As a result, the earphone device L1 can prevent an increase in the power consumption due to the earphone devices L1 and R1 determined to be in the non-wearing state from both ears of the user. After step St31, the process of the CPU 11 returns to step St1 until the power of the earphone device L1 is turned off.

When determining that the measurement result (for example, RSSI) of the reception signal from the earphone device R1 is less than -39 dBm (step St1, NO), the CPU 11 determines whether the measurement result (for example, RSSI) of the reception signal from the earphone device R1 is within -49 dBm to -40 dBm (step St4). When determining that the measurement result (for example, RSSI) of the reception signal from the earphone device R1 is within -49 dBm to -40 dBm (step St4, YES), the CPU 11 determines that only one of the earphone devices L1 and R1 is worn on the ear of the user by referring to the audio memory 13 (step St5). Here, the CPU 11 refers to the audio memory 13 and determines whether a permission to execute the external sound capturing processing is set even when only one of the earphone devices L1 and R1 is in the wearing state (step St32). For example, the audio memory 13 stores a flag indicating whether to permit executing the external sound capturing processing even when only one of the earphone devices L1 and R1 is in the wearing state. When determining that the permission to execute the external sound capturing processing is set even when only one of the earphone devices L1 and R1 is in the wearing state (step St32, YES), the CPU 11 continues the execution of the external sound capturing processing (step St33). After step St33, the process of the CPU 11 returns to step St1 until the power of the earphone device L1 is turned off.

On the other hand, when determining that the permission to execute the external sound capturing processing is not set even when only one of the earphone devices L1 and R1 is in the wearing state (step St32, NO), the CPU 11 stops the execution of the external sound capturing processing (step St34, set external sound capturing to OFF). Further, the CPU 11 attempts to reduce the power consumption by interrupting or stopping the execution of various kinds of processing other than the wireless communication with each of the smartphone SM1 and the earphone device R1 (step St34). As a result, the earphone device L1 can prevent the increase in the power consumption due to any one of the earphone devices in the non-wearing state. After step St34, the process of the CPU 11 returns to step St1 until the power of the earphone device L1 is turned off.

When determining that the measurement result (for example, RSSI) of the reception signal from the earphone device R1 is not within -49 dBm to -40 dBm (step St4, NO), the CPU 11 determines whether the measurement result (for example, RSSI) of the reception signal from the earphone device R1 is within -60 dBm to -50 dBm (step St9). When determining that the measurement result (for example, RSSI) of the reception signal from the earphone device R1 is within -60 dBm to -50 dBm (step St9, YES), the CPU 11 determines that both the earphone devices L1 and R1 are worn on the ears of the user by referring to the audio memory 13 (step St10). The CPU 11 continues the execution of the external sound capturing processing (step St35). After step St35, the process of the CPU 11 returns to step St1 until the power of the earphone device L1 is turned off. When it is determined that the measurement result (for example, RSSI) of the reception signal from the earphone device R1 is not within -60 dBm to - 50 dBm (step St9, NO), since the RSSI may not be correctly measured by the CPU 11, the process of the CPU 11 returns to step St1 until the power of the earphone device L1 is turned off.

### 5-4. Fourth Operation Procedure

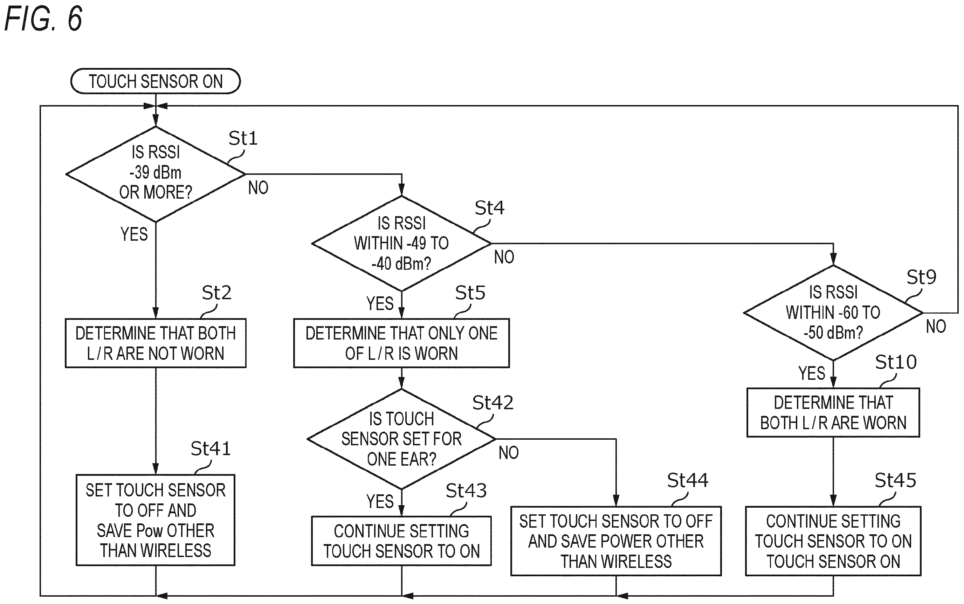

FIG. 6 is a flowchart showing a fourth operation procedure example of the earphone apparatus 1 according to the first embodiment in time series. Various kinds of processing shown in FIG. 6 are mainly executed by one or both of the CPU 11 of the earphone device L1 of the earphone apparatus 1 and the CPU 21 of the earphone device R1 of the earphone apparatus 1. To simplify the description of FIG. 6, it is assumed that the CPU 11 of the earphone device L1 executes various kinds of processing.

As a premise of the description of FIG. 6, the earphone device L1 stores, in the audio memory 13, a flag indicating that a user operation to the touch sensor TS1 is received (set touch sensor to ON). That is, a mode for executing reception processing of the user operation to the touch sensor TS1 is set as one of the user preset functions in the audio memory 13 of the earphone device L1. The process in FIG. 6 is periodically executed at a cycle of, for example, about 10 milliseconds.

In FIG. 6, the CPU 11 measures the reception parameter (for example, received electric field strength or reception sensitivity) of the reception signal from the other earphone device R1 obtained via the BT wireless unit 16 and the BT baseband processing unit 15. When determining that a measurement result (for example, RSSI) of the reception signal from the earphone device R1 is -39 dBm or more (step St1, YES), the CPU 11 determines that both the earphone devices L1 and R1 are not worn (see FIG. 2C) by referring to the audio memory 13 (step St2). The CPU 11 deletes the flag indicating that the reception processing of the user operation to the touch sensor TS1 is to be performed (in other words, set the touch sensor to OFF) based on the determination in step St2 (step St41). Further, the CPU 11 attempts to reduce the power consumption by interrupting or stopping the execution of various kinds of processing other than the wireless communication with each of the smartphone SM1 and the earphone device R1 (step St41). As a result, the earphone device L1 can prevent an increase in the power consumption due to the earphone devices L1 and R1 determined to be in the non-wearing state from both ears of the user. After step St41, the process of the CPU 11 returns to step St1 until the power of the earphone device L1 is turned off.

When determining that the measurement result (for example, RSSI) of the reception signal from the earphone device R1 is less than -39 dBm (step St1, NO), the CPU 11 determines whether the measurement result (for example, RSSI) of the reception signal from the earphone device R1 is within -49 dBm to -40 dBm (step St4). When determining that the measurement result (for example, RSSI) of the reception signal from the earphone device R1 is within -49 dBm to -40 dBm (step St4, YES), the CPU 11 determines that only one of the earphone devices L1 and R1 is worn on the ear of the user by referring to the audio memory 13 (step St5). Here, the CPU 11 refers to the audio memory 13 and determines whether a permission to execute the reception processing of the user operation to the touch sensor TS1 is set even when only one of the earphone devices L1 and R1 is in the wearing state (step St42). For example, the audio memory 13 stores a flag indicating whether to permit executing the reception processing of the user operation to the touch sensor TS1 even when only one of the earphone devices L1 and R1 is in the wearing state. When determining that the permission to execute the reception processing of the user operation to the touch sensor TS1 is set even when only one of the earphone devices L1 and R1 is in the wearing state (step St42, YES), the CPU 11 continues the execution of the reception processing of the user operation to the touch sensor TS1 (step St43). After step St43, the process of the CPU 11 returns to step St1 until the power of the earphone device L1 is turned off.

On the other hand, when determining that the permission to execute the reception processing of the user operation to the touch sensor TS1 is not set even when only one of the earphone devices L1 and R1 is in the wearing state (step St42, NO), the CPU 11 stops the permission to execute the reception processing of the user operation to the touch sensor TS1 (step St44, set touch sensor to OFF). Further, the CPU 11 attempts to reduce the power consumption by interrupting or stopping the execution of various kinds of processing other than the wireless communication with each of the smartphone SM1 and the earphone device R1 (step St44). As a result, the earphone device L1 can prevent the increase in the power consumption due to any one of the earphone devices in the non-wearing state. After step St44, the process of the CPU 11 returns to step St1 until the power of the earphone device L1 is turned off.

When determining that the measurement result (for example, RSSI) of the reception signal from the earphone device R1 is not within -49 dBm to -40 dBm (step St4, NO), the CPU 11 determines whether the measurement result (for example, RSSI) of the reception signal from the earphone device R1 is within -60 dBm to -50 dBm (step St9). When determining that the measurement result (for example, RSSI) of the reception signal from the earphone device R1 is within -60 dBm to -50 dBm (step St9, YES), the CPU 11 determines that both the earphone devices L1 and R1 are worn on the ears of the user by referring to the audio memory 13 (step St10). The CPU 11 continues the execution of the reception processing of the user operation to the touch sensor TS1 (step St45). After step St45, the process of the CPU 11 returns to step St1 until the power of the earphone device L1 is turned off. When it is determined that the measurement result (for example, RSSI) of the reception signal from the earphone device R1 is not within -60 dBm to -50 dBm (step St9, NO), since the RSSI may not be correctly measured by the CPU 11, the process of the CPU 11 returns to step St1 until the power of the earphone device L1 is turned off.

Accordingly, the earphone apparatus 1 according to the present embodiment includes a pair of earphone devices L1 and R1 worn on the ears of the user. A first earphone device (earphone device L1), which is one of a pair of earphone devices, includes a first communication interface (BT wireless unit 16) that wirelessly communicably connects to a second earphone device (earphone device R1), which is the other of the pair of earphone devices, and a first processor (CPU 11) that determines a wearing state of each of the first earphone device and the second earphone device on the ears of the user based on a reception parameter (RSSI) of a signal received from the second earphone device. Accordingly, the earphone apparatus 1 can easily and stably detect whether the earphone apparatus 1 is worn in the ear of the user using only the reception parameter of the reception signal without placing a sensor for wearing detection in a housing of the earphone apparatus 1 in at least one earphone device L1. Further, since the earphone apparatus 1 does not need to place the sensor for wearing detection in the housing of the earphone apparatus 1, it is possible to reduce the cost and size of the earphone apparatus 1. Since the earphone apparatus 1 can appropriately determine whether the earphone apparatus 1 is worn in the ear of the user based on the reception parameter of the reception signal, the earphone apparatus 1 does not erroneously detect that the earphone apparatus 1 is worn in the ear of the user even when the earphone apparatus 1 is housed in a housing of a cradle.

In addition, the second earphone device (earphone device R1) includes a second communication interface (BT wireless unit 26) that wirelessly communicably connects to the first earphone device (earphone device L1), and a second processor (CPU 21) that determines the wearing state of each of the first earphone device and the second earphone device on the ears of the user based on a reception parameter (RSSI) of a signal received from the first earphone device. Accordingly, the earphone apparatus 1 can easily and stably detect whether the earphone apparatus 1 is worn in the ear of the user using only the reception parameter of the reception signal without placing the sensor for wearing detection in the housing of the earphone apparatus 1 not only in the earphone device R1 but also in the earphone device L1. Further, since the earphone apparatus 1 does not need to place the sensor for wearing detection in the housing of the earphone apparatus 1 not only in the earphone device L1 but also in the earphone device R1, it is possible to reduce the cost and size of the earphone apparatus 1. Since the earphone apparatus 1 can appropriately determine whether the earphone apparatus 1 is worn in the ear of the user based on the reception parameter of the reception signal, the earphone apparatus 1 does not erroneously detect that the earphone apparatus 1 is worn in the ear of the user even when the earphone apparatus 1 is housed in a housing of a cradle.

The first communication interface (BT wireless unit 16) wirelessly communicably connects to a mobile wireless terminal (smartphone SM1) held by the user. The first processor (CPU 11) stops, based on a determination in which at least one of the first earphone device (earphone device L1) and the second earphone device (earphone device R1) is in the non-wearing state from the ear of the user during processing of receiving and playing the music signal from the mobile wireless terminal held by the user via the first communication interface, the playing processing of the music signal. Accordingly, since at least one of the earphone devices L1 and R1 is not worn, the earphone apparatus 1 can reduce the power consumption of the earphone apparatus 1 by stopping the music playing from the smartphone SM1.

The second processor (CPU 21) stops, based on the determination in which at least one of the first earphone device (earphone device L1) and the second earphone device (earphone device R1) is in the non-wearing state from the ear of the user during the processing of receiving and playing the music signal from the mobile wireless terminal (smartphone SM1) held by the user via the second communication interface, the playing processing of the music signal. Accordingly, not only in the earphone device L1 but also in the earphone device R1, since at least one of the earphone devices L1 and R1 is not worn, the earphone apparatus 1 can reduce the power consumption of the earphone apparatus 1 by stopping the playing of the music from the smartphone SM1.

The first earphone device (earphone device L1) further includes a first microphone (microphone MIC1b) that picks up an external sound signal around the ear of the user. The first processor (CPU 11) stops, based on a determination in which at least one of the first earphone device (earphone device L1) and the second earphone device (earphone device R1) is in the non-wearing state from the ear of the user during an operation of a noise cancellation mode (noise cancelling processing) for cancelling a noise component included in an external sound signal picked up by the first microphone, the operation of the noise cancellation mode. Accordingly, since at least one of the earphone devices L1 and R1 is not worn, the earphone apparatus 1 can reduce the power consumption of the earphone apparatus 1 by stopping the noise cancelling processing for cancelling the noise component included in the external sound signal picked up by the microphone MIC1b.

The second earphone device (earphone device R1) further includes a second microphone (microphone MIC2b) that picks up the external sound signal around the ear of the user. The second processor (CPU 21) stops, based on a determination in which at least one of the first earphone device (earphone device L1) and the second earphone device (earphone device R1) is in the non-wearing state from the ear of the user during an operation of a noise cancellation mode (noise cancelling processing) for cancelling a noise component included in an external sound signal picked up by the second microphone, the operation of the noise cancellation mode. Accordingly, not only in the earphone device L1 but also in the earphone device R1, since at least one of the earphone devices L1 and R1 is not worn, the earphone apparatus 1 can reduce the power consumption of the earphone apparatus 1 by stopping the noise cancelling processing for cancelling the noise component included in the external sound signal picked up by the microphone MIC1b.

The first earphone device (earphone device L1) further includes a third microphone (microphone MIC1c) that picks up the external sound signal around the ear of the user and a speaker SPK1 that outputs the external sound signal picked up by the third microphone. The first processor (CPU 11) stops, based on a determination in which at least one of the first earphone device (earphone device L1) and the second earphone device (earphone device R1) is in the non-wearing state from the ear of the user during an external sound capturing mode for capturing an external sound signal picked up by the third microphone and outputting the external sound signal from the speaker SPK1, the external sound capturing mode. Accordingly, since at least one of the earphone devices L1 and R1 is not worn, the earphone apparatus 1 can reduce the power consumption of the earphone apparatus 1 by stopping the external sound capturing processing for outputting the external sound signal picked up by the microphone MICIc from the speaker SPK1.

The second earphone device (earphone device R1) further includes a fourth microphone (microphone MIC2c) that picks up the external sound signal around the ear of the user and a speaker SPK2 that outputs the external sound signal picked up by the fourth microphone. The first processor (CPU 11) stops, based on the determination in which at least one of the first earphone device (earphone device L1) and the second earphone device (earphone device R1) is in the non-wearing state from the ear of the user during an external sound capturing mode for capturing an external sound signal picked up by the fourth microphone and outputting the external sound signal from the speaker SPK2, the external sound capturing mode. Accordingly, not only in the earphone device L1 but also in the earphone device R1, since at least one of the earphone devices L1 and R1 is not worn, the earphone apparatus 1 can reduce the power consumption of the earphone apparatus 1 by stopping the external sound capturing processing for outputting the external sound signal picked up by the microphone MIC2c from the speaker SPK2.

The first earphone device (earphone device L1) further includes a first touch sensor (touch sensor TS1) that receives an operation of the user. The first processor (CPU 11) switches, based on a determination in which at least one of the first earphone device (earphone device L1) and the second earphone device (earphone device R1) is in the non-wearing state from the ear of the user during a setting to permit use of the first touch sensor, a setting to prohibit the use of the first touch sensor. Accordingly, since at least one of the earphone devices L1 and R1 is not worn, the earphone apparatus 1 can reduce the power consumption of the earphone apparatus 1 by stopping the reception processing of the user operation to the touch sensor TS1.

The second earphone device (earphone device R1) further includes a second touch sensor (touch sensor TS2) that receives an operation of the user. The second processor (CPU 21) switches, based on a determination in which at least one of the first earphone device (earphone device L1) and the second earphone device (earphone device R1) is in the non-wearing state from the ear of the user during a setting to permit use of the second touch sensor, a setting to prohibit the use of the second touch sensor. Accordingly, not only in the earphone device L1 but also in the earphone device R1, since at least one of the earphone devices L1 and R1 is not worn, the earphone apparatus 1 can reduce the power consumption of the earphone apparatus 1 by stopping the reception processing of the user operation to the touch sensor TS1.

Although various embodiments have been described above with reference to the accompanying drawings, the present disclosure is not limited thereto. It is apparent to a person skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the invention.

### INDUSTRIAL APPLICABILITY

The present disclosure is useful as an earphone apparatus and a wearing detection method that easily and stably detect whether the earphone apparatus is worn on ears of a user without placing a sensor for wearing detection in a housing.

## Claims

1. An earphone apparatus comprising:
a pair of earphone devices worn on ears of a user, wherein
a first earphone device, which is one of the pair of earphone devices, includes
a first communication interface configured to wirelessly communicably connect to a second earphone device, which is the other of the pair of earphone devices, and
a first processor configured to determine a wearing state of each of the first earphone device and the second earphone device on the ears of the user based on a reception parameter of a signal received from the second earphone device.

2. The earphone apparatus according to claim 1, wherein
the second earphone device includes
a second communication interface configured to wirelessly connect to the first earphone device communicably, and
a second processor configured to determine the wearing state of each of the first earphone device and the second earphone device on the ears of the user based on a reception parameter of a signal received from the first earphone device.

3. The earphone apparatus according to claim 1, wherein
the first communication interface is configured to wirelessly communicably connect to a mobile wireless terminal held by the user communicably, and
the first processor is configured to stop, based on a determination in which at least one of the first earphone device and the second earphone device is in a non-wearing state from the ear of the user during processing of receiving and playing a music signal from the mobile wireless terminal via the first communication interface, the playing processing of the music signal.

4. The earphone apparatus according to claim 2, wherein
the second processor is configured to stop, based on a determination in which at least one of the first earphone device and the second earphone device is in a non-wearing state from the ear of the user during processing of receiving and playing a music signal from a mobile wireless terminal held by the user via the second communication interface, the playing processing of the music signal.

5. The earphone apparatus according to claim 1, wherein
the first earphone device further includes a first microphone configured to pick up an external sound signal around the ear of the user, and
the first processor is configured to stop, based on a determination in which at least one of the first earphone device and the second earphone device is in a non-wearing state from the ear of the user during an operation of a noise cancellation mode for cancelling a noise component included in the external sound signal picked up by the first microphone, the operation of the noise cancellation mode.

6. The earphone apparatus according to claim 2, wherein
the second earphone device further includes a second microphone configured to pick up an external sound signal around the ear of the user, and
the second processor is configured to stop, based on a determination in which at least one of the first earphone device and the second earphone device is in a non-wearing state from the ear of the user during an operation of a noise cancellation mode for cancelling a noise component included in the external sound signal picked up by the second microphone, the operation of the noise cancellation mode.

7. The earphone apparatus according to claim 1, wherein
the first earphone device further includes a third microphone configured to pick up an external sound signal around the ear of the user, and a speaker configured to output the external sound signal picked up by the third microphone, and
the first processor is configured to stop, based on a determination in which at least one of the first earphone device and the second earphone device is in a non-wearing state from the ear of the user during an external sound capturing mode for capturing the external sound signal picked up by the third microphone and outputting the external sound signal from the speaker, the external sound capturing mode.

8. The earphone apparatus according to claim 1, wherein
the second earphone device further include a fourth microphone configured to pick up an external sound signal around the ear of the user, and a speaker configured to output the external sound signal picked up by the fourth microphone, and
the first processor is configured to stop, based on a determination in which at least one of the first earphone device and the second earphone device is in a non-wearing state from the ear of the user during an external sound capturing mode for capturing the external sound signal picked up by the fourth microphone and outputting the external sound signal from the speaker, the external sound capturing mode.

9. The earphone apparatus according to claim 1, wherein
the first earphone device further includes a first touch sensor configured to receive an operation of the user, and
the first processor configured to switch, based on a determination in which at least one of the first earphone device and the second earphone device is in a non-wearing state from the ear of the user during a setting to permit use of the first touch sensor, a setting to prohibit the use of the first touch sensor.

10. The earphone apparatus according to claim 2, wherein
the second earphone device further includes a second touch sensor configured to receive an operation of the user, and
the second processor configured to switch, based on a determination in which at least one of the first earphone device and the second earphone device is in a non-wearing state from the ear of the user during a setting to permit use of the second touch sensor, a setting to prohibit the use of the second touch sensor.

11. A wearing detection method executed by at least one of a pair of earphone devices worn on ears of a user, the wearing detection method comprising:
wirelessly communicably connecting to a first earphone device, which is one of the pair of earphone devices, and a second earphone device, which is the other of the pair of earphone devices; and
determining a wearing state of each of the first earphone device and the second earphone device on the ears of the user based on a reception parameter of a signal received from the first earphone device or the second earphone device.
